# NEUE EUROPÄISCHE PATENTSCHRIFT

(11) **EP 0 395 838 B2**
(45) Veröffentlichungstag und Bekanntmachung des Hinweises auf die Entscheidung über den Einspruch: **04.10.2000**
(45) Hinweis auf die Patenterteilung: 28.09.1994
(21) Anmeldenummer: 90102045.3
(22) Anmeldetag: 02.02.1990
(51) Int. Cl.: H01B 7/28, G02B 6/44

(54) **Elektrisches oder optisches Kabel**
Electrical or optical cable
Câble électrique ou optique

(30) Priorität: 29.04.1989 DE 3914365
(43) Veröffentlichungstag der Anmeldung: 07.11.1990
(73) Patentinhaber: ALCATEL, 75008 Paris (FR)
(72) Erfinder: Hög, Georg, D-4050 Mönchengladbach 2 (DE); Hoffart, Michael, D-5628 Heiligenhaus (DE); Stankovic, Dragan, D-5100 Aachen (DE); Wichura, Dieter, D-5144 Wegberg 2 (DE); Zamzow, Peter, D-4630 Bochum (DE)
(74) Vertreter: Mende, Eberhard, Dipl.-Ing.

(56) Entgegenhaltungen:
- EP-A- 0 268 286
- DE-A- 1 765 469
- DE-A- 2 226 500
- DE-C- 2 443 973
- FR-A- 2 608 287
- US-A- 4 553 815
- US-A- 4 767 183
- PATENT ABSTRACTS OF JAPAN, Band 13, Nr. 366 (E-806), 15. August 1989; & JP-A-1 122 506 (FUJIKARA LTD) 15-05-1989
- H. KELPER et al.: "Handbook of liquid crystals", Kapitel 13: "Liquid-crystalline order in polymers", 1980, Seiten 594-602, Weinheim Verlag Chemie, DE
- "Hoechst High Chem Magazin", Heft 6, Oktober 1988, Seiten 36-45
- "Kunststoffe in der Elektrotechnik und Elektronik*", 1988, Verlag W. Kohlhammer, Stuttgart, Seiten 420, 434, 435, 448, 512, 513

## Beschreibung

Ein elektrisches Kabel ist beispielsweise ein Kupferkabel, während ein optisches Kabel ein Lichtwellenleiterkabel ist. Elektrische und optische Kabel haben bekanntlich als äußere Begrenzung und Schutz einen Mantel, an den sich im Innern des Kabels im allgemeinen eine Diffusionssperre anschließt, die die Aufgabe hat, das Eindringen von Feuchtigkeit in das Kabel zu verhindern.

Diffusionssperren in Kabeln bestehen beispielsweise aus einem Aluminiumband. Metallhaltige Diffusionssperren, wie Aluminiumbänder, haben jedoch den Nachteil, daß die Kabel durch den Einbau von metallhaltigen Diffusionssperren blitzgefährdet werden. Eine elektrische Leitung mit einer dünnen Sperr- oder Trennschicht, die aus einem beidseitig metallisierten Kunststoffband besteht, geht aus der DE-PS 24 43 973 hervor. Man ist deshalb dazu übergegangen, metallhaltige Diffusionssperren bei Kabeln durch metallfreie Diffusionssperren zu ersetzen, und zwar insbesondere bei LWL-Kabeln. Als metallfreie Diffusionssperre bei Kabeln wird beispielsweise eine Polyesterfolie verwendet oder es werden an das Mantelmaterial oder die Füllmasse angepaßte Werkstoffe vorgeschlagen, damit eine Verklebung der angrenzenden Materialien stattfinden kann (DE-OS 17 65 469).

Der Erfindung liegt die Erkenntnis zugrunde, daß die bekannten metallfreien Diffusionssperren, wie z. B. eine Polyesterfolie, nicht die gewünschte Diffusionssperrwirkung haben und das unerwünschte Eindringen von Feuchtigkeit in ein Kabel nicht in der erforderlichen Weise verhindern können.

Der Erfindung liegt deshalb die Aufgabe zugrunde, ein elektrisches oder optisches Kabel mit einer metallfreien Diffusionssperre anzugeben, die das Eindringen von Feuchtigkeit in das Kabel tatsächlich verhindert. Außerdem soll die Diffusionssperre zusätzlich noch die Eigenschaft von Zugentlastungselementen haben, so daß unter Umständen sogar auf zusätzliche Zugentlastungselemente verzichtet werden kann. Diese Aufgabe wird bei einem elektrischen oder optischen Kabel mit einer Diffusionssperre nach der Erfindung durch das Kennzeichen des Anspruches gelöst. Das Kabel, auf das die Erfindung anwendbar ist, kann jedes elektrische Kabel, wie z. B. ein Kupferkabel oder ein Lichtwellenleiterkabel, sein.

Der Einsatz von LCP bei Lichtwellenleiterkabeln ist an sich bekannt (US-PS 47 67 183), in diesem Fall wird das die optische Faser sowie ein Polstermaterial enthaltende Röhrchen (buffer tube) aus diesem Werkstoff hergestellt.

Die Erfindung wird im folgenden an einem Ausführungsbeispiel erläutert.

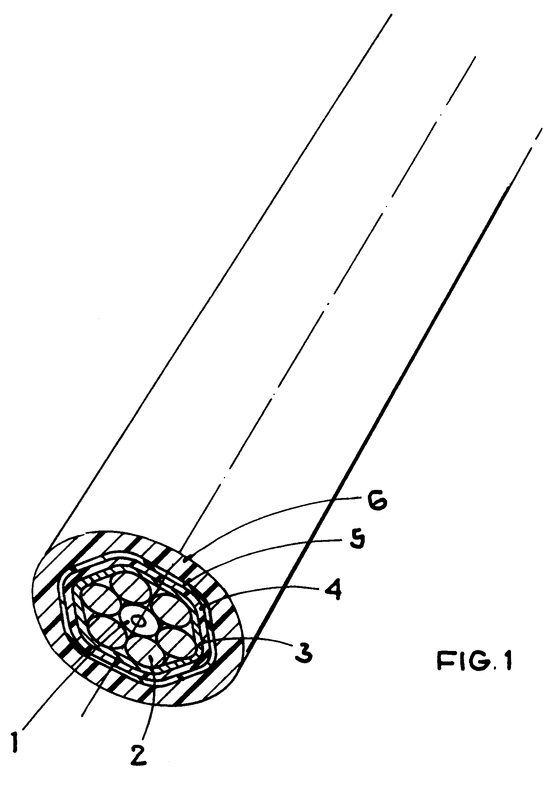

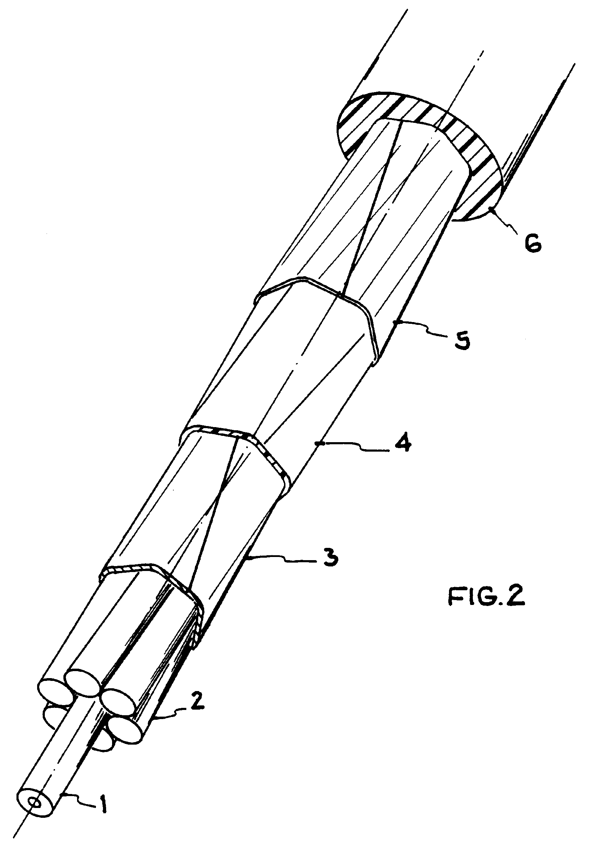

Die Figuren 1 und 2 zeigen ein elektrisches oder optisches Kabel nach der Erfindung mit einem Kern 1, um den die Kabeladern 2 angeordnet sind. Die perspektivische Darstellung der Figur 2 läßt die einzelnen Bestandteile des Kabels besonders deutlich erkennen. Der Kabelkern 1 besteht beispielsweise aus einem glasfaserverstärkten Kunststoff. Die den Kern 1 umgebenden Adern 2 können beispielsweise miteinander verseilt sein. Eine Ader 2 enthält bekanntlich mehrere Fasern, die von einer Hülle umgeben sind. Die zwischen den Adern 2 und dem Kern 1 vorhandenen Zwischenräume können gefüllt oder ungefüllt sein. Als Füllmaterial eignet sich z. B. Petrolat. Die Adern 2 sind von einer Bewicklung 3 umgeben, die zum Zusammenhalt der Adern 2 dient. Die Bewicklung 3 besteht beispielsweise aus einem Band oder aus Fäden. Der Kern 1, die Adern 2 und die die Adern 2 umgebende Bewicklung 3 bilden die sogenannte Kabelseele. Nach der Figur ist die Kabelseele von sogenannten Rovings (Bändern) 4 umgeben, die zur Zugentlastung dienen. Die Rovings 4 bestehen beispielsweise aus Glas und/oder Aramid.

An die Rovings 4 schließt sich eine Diffusionssperre 5 an, die nach der Erfindung aus einem Flüssigkristall-Polymer besteht. Flüssigkristall-Polymere werden als "LCP" bezeichnet. "LCP" bedeutet Liquid Crystal Polymer. Die Diffusionssperre 5 besteht aus einer LCP-Folie, die längslaufend aufgebracht ist. Die Diffusionssperre 5 wird von einem Kabelmantel 6 umgeben.

Da eine Diffusionssperre aus einem Flüssigkristall-Polymer nicht nur die Eigenschaft hat, daß sie in vorzüglicher Weise das Eindringen von Feuchtigkeit in das Kabel verhindert, sondern außerdem noch ausgezeichnete Zugentlastungseigenschaften aufweist, kann unter Umständen auf das gesonderte Zugentlastungselement 4 verzichtet werden.

Die Diffusionssperre 5 ist mit der Innenfläche des Mantels 6 verbunden. Eine innige Verbindung zwischen Diffusionssperre 5 und Mantel 6 erhält man durch Verschweißen oder Verkleben mit einem Heißschmelzkleber.

## Patentansprüche

1. Elektrisches oder optisches Kabel mit einem eine Kabelseele umgebenden Mantel (6) und einer vom Mantel (6) überdeckten Kunststoff-Folie, die mit dem Mantel (6) verschweißt oder verklebt ist, wobei als Kunststoff-Folie eine als Diffusionssperre (5) dienende Flüssigkristall-Polymer (LCP)-Folie eingesetzt ist und die Flüssigkristall-Polymer (LCP)-Folie längslaufend um die Kabelseele herumgeformt ist.

## Claims

1. Electrical or optical cable with a sheath (6) that surrounds a cable core and with a plastic foil which is covered by the sheath (6) and welded with or adhered to the sheath, wherein the plastic foil is a liquid crystal polymer (LCP) film serving as a diffusion barrier (5) and the liquid crystal polymer (LCP) film being formed in longitudinal direction around the cable core.

## Revendications

1. Câble électrique ou optique avec une gaine (6) qui entoure une âme du câble et avec une feuille de plastique qui est recouverte de la gaine (6) et soudée ou collée à la gaine (6), à quoi la feuille de plastique est un foil d'un polymère sous forme de cristaux liquides (LCP) qui sert de barrage antidiffusion (5) et le foil d'un polymère sous forme de cristaux liquides (LCP) est disposé longitudinalement autour de l'âme du câble.
